# EUROPEAN PATENT SPECIFICATION

(11) **EP 2 835 952 B1**
(45) Date of publication and mention of the grant of the patent: **21.01.2026**
(21) Application number: 12890970.2
(22) Date of filing: 27.12.2012
(51) Int. Cl.: H04W 4/20, G06F 3/0486, H04L 12/18, H04L 67/02, G06F 3/04883, G06F 3/04886, H04L 67/06, H04W 4/14, H04W 4/21

(54) **INFORMATION SHARING METHOD AND DEVICE**
VERFAHREN UND VORRICHTUNG ZUM TEILEN VON INFORMATIONEN
PROCÉDÉ ET DISPOSITIF DE PARTAGE D'INFORMATIONS

(43) Date of publication of application: 11.02.2015
(73) Proprietor: Huawei Technologies Co., Ltd., Longgang District Shenzhen, Guangdong 518129 (CN)
(72) Inventor: YANG, Fen, Shenzhen Guangdong 518129 (CN)
(74) Representative: Gill Jennings & Every LLP
(86) International application number: PCT/CN2012/087687
(87) International publication number: WO 2014/101052

(56) References cited:
- CN-A- 102 694 830
- CN-A- 102 739 764
- US-A1- 2009 024 463
- US-A1- 2009 265 242
- US-A1- 2012 246 228
- US-A1- 2012 254 927
- US-A1- 2012 254 927

## Description

### TECHNICAL FIELD

The present invention relates to the field of communications and Internet technologies, and in particular, to an information sharing method and apparatus.

### BACKGROUND

Sharing has already been widely used in Internet applications for information exchange and interaction. Sharing is no longer limited to the distance, and a user can use a terminal to record every detail of the daily life and share the joyful experiences with others. A user can share resources on some application websites with friends over an SNS (social networking service) platform, for example, a user can send corresponding picture shared information on an album storage website to friends, and the friends can click the link of the shared information to visit the album.

In the prior art, a terminal provides multiple information sharing ways: after the terminal acquires new information (for example, takes a picture or installs an application), an application system asks whether to share the acquired information, and according to the selection of a user, shares the acquired information (for example, a picture or an application) to a service platform (for example, microblog or space); the terminal user selects a link address of a shared resource is selected, and a sharing mode is selected by using a "Share" menu of an application to implement resource sharing on the terminal. The information sharing ways on a terminal are diversified, some are system supported sharing, and some are sharing functions carried by applications; therefore, a user must select different sharing ways in different scenarios, and for different applications, the user further needs to memorize a sharing entry of each application, which affects the resource sharing efficiency of the terminal.
US 2012/246228 A1 discloses techniques and systems for sharing content, wherein a user acquires content and provides endpoints for recipients with which to share content using a sharing channel. US 2009/0024463 A1 discloses an apparatus for stimulating user engagement with advertising content and an interface presented in a display for viewing by a user, the interface including a content window occupying a substantially fixed location in the interface, a sequence of units of content being presented in the content window.

### SUMMARY

In view of the above, it is necessary to provide an information sharing method and apparatus, which are capable of improving the time effectiveness, accuracy, and abundance of information sharing. The invention is defined in the appended claims.

In one aspect, an information sharing method is provided, which includes: receiving a shared resource dragged by a user into an information sharing field apparatus; extracting an information type of the shared resource, and acquiring attribute information of the shared resource according to the information type; acquiring a target sharing user and a sharing mode; and invoking an interface corresponding to the sharing mode, and sending the shared resource to a terminal of the target sharing user according to the attribute information of the shared resource, the method further comprising supporting establishment of multiple information sharing fields, and when the multiple information sharing fields exist, supporting split-screen display of the multiple information sharing fields wherein the shared resource supports multiple resource types, comprising at least one of the following types: a locally installed application resource, a local text resource, a local multimedia resource, a network link resource, a network text resource, and a network multimedia resource.

In a first implementation manner of this aspect, the sharing field apparatus provides a uniform resource sharing application, and uses the uniform resource sharing application to implement sharing of one or more resource types.

In a second implementation manner of this aspect, the shared resource supports multiple resource types, including at least one of the following types: a locally installed application resource, a local text resource, a local multimedia resource, a network link resource, a network text resource, and a network multimedia resource.

In a third implementation manner of this aspect, the acquiring the target sharing user supports multiple acquiring modes, including at least one of the following modes: a manual input mode and an associated address book extraction mode.

In a fourth implementation manner of this aspect, the sharing mode supports multiple modes, including at least one of the following modes: a short message service (SMS) message mode, a multimedia messaging service (MMS) message mode, a push mode, an email mode, a microblog mode, a WeChat mode, and an arbitrary network platform contact mode.

In a fifth implementation manner of this aspect, the information sharing field supports display of a sharing state, including at least one of the following displayed states: sharing is ongoing, sharing is successful, and sharing fails.

In a sixth implementation manner of this aspect, the method further includes: supporting establishment of multiple information sharing fields, and when the multiple information sharing fields exist, supporting split-screen display of the multiple information sharing fields.

In a seventh implementation manner of this aspect, the method further includes: supporting presetting of a target sharing user and a sharing mode, storing the setting in an attribute of the information sharing field, and supporting naming of the information sharing field for distinguishing.

In an eighth implementation manner of this aspect, the method further includes: if the user does not select or set a sharing mode, using a default sharing mode of a system to send the shared resource.

In a ninth implementation manner of this aspect, the method further includes: supporting upload of a shared resource of a local type to a server, and acquiring from the server a URL in which the shared resource is stored.

In a tenth implementation manner of this aspect, the method further includes: supporting upload of a sharing operation record to a server, receiving a management operation from the server, and supporting query from the server a sharing history record.

In an eleventh implementation manner of this aspect, the method further includes: supporting cancellation of a current sharing operation in a manner of dragging the shared resource out of the information sharing field or deleting an icon of the shared resource in the information sharing field.

In a twelfth implementation manner of this aspect, the method further includes: if the sharing mode selected by the user does not exist or is not supported in information of the target sharing user, prompting that the sharing fails.

In another aspect, an information sharing system is provided, which includes an information sharing field apparatus and a server apparatus. The information sharing field apparatus is configured to receive a shared resource dragged by a user into the information sharing field apparatus; extract an information type of the shared resource, and acquire attribute information of the shared resource according to the information type; acquire a target sharing user and a sharing mode; and invoke an interface corresponding to the sharing mode, send the shared resource to the target sharing user according to the attribute information of the shared resource, and support establishment of multiple information sharing fields, and when the multiple information sharing fields exist, support split-screen display of the multiple information sharing fields. The server apparatus is configured to receive and store a shared resource, return a URL in which the shared resource is stored, receive and store a sharing operation record, and when the information sharing field apparatus puts forward a query request, return a sharing history record wherein the shared resource supports multiple resource types, comprising at least one of the following types: a locally installed application resource, a local text resource, a local multimedia resource, a network link resource, a network text resource, and a network multimedia resource.

In another aspect, an information sharing field apparatus is provided, which includes: a shared resource receiving module, configured to receive a shared resource dragged by a user into the information sharing field apparatus, and display an icon of the shared resource in the information sharing field apparatus; a shared resource type determining module, configured to extract an information type of the shared resource, and acquire attribute information of the shared resource according to the information type; a target sharing user acquiring module, configured to acquire a target user in need of sharing, so as to enable the user to send shared information to the specific target user; a sharing mode acquiring module, configured to acquire a sharing mode, so as to enable the user to select different sharing modes according to requirements and preference; and an interface invoking module, configured to invoke an interface corresponding to the sharing mode, and send the shared resource to a terminal of the target sharing user according to the attribute information of the shared resource, the apparatus further comprising a sharing field setting module, configured to create a sharing field, delete a sharing field, or set sharing field attribute information, wherein the sharing field attribute information comprises a sharing field identifier, a target sharing user, a sharing mode, and a split-screen display background pattern wherein the shared resource supports multiple resource types, comprising at least one of the following types: a locally installed application resource, a local text resource, a local multimedia resource, a network link resource, a network text resource, and a network multimedia resource.

In a first implementation manner of this aspect, a sharing state display module is further included, which is configured to display a sharing state, including at least one of the following states: sharing is ongoing, sharing is successful, and sharing fails.

In a second implementation manner of this aspect, a sharing field setting module is further included, which is configured to create a sharing field, delete a sharing field, or set sharing field attribute information, where the sharing field attribute information includes a sharing field identifier, a target sharing user, a sharing mode, and a split-screen display background pattern.

In a third implementation manner of this aspect, a server interaction module is further included, which is configured to upload the shared resource to a server, and acquire from the server a URL in which the shared resource is stored; and is further configured to upload a sharing operation record to the server, and support query from the server a sharing history record.

In still another aspect, an information sharing field apparatus is provided, which includes a memory and a processor, where the memory is configured to store a shared resource; and the processor is configured to perform all or a part of the steps in the foregoing method.

An embodiment of the present invention has the following beneficial effects: Different from a situation in the prior art, in the embodiment of the present invention, a uniform resource sharing application can be provided by using an information sharing method, which implements sharing of different resource types and applications through a uniform sharing application entry, and improves sharing convenience and user experience; and enables the use of different sharing modes in accordance with different resource types, implements sharing for a specific target user, and improves the time effectiveness, accuracy, and abundance of information sharing.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of an information sharing method according to Embodiment 1 of the present invention;
FIG. 2 is an effect diagram of an information sharing sending end according to Embodiment 1 of the present invention;
FIG. 3 is an effect diagram of an information sharing receiving end according to Embodiment 1 of the present invention;
FIG. 4 is another effect diagram of an information sharing receiving end according to Embodiment 1 of the present invention;
FIG. 5 is an effect diagram of an information sharing sending end according to Embodiment 2 of the present invention;
FIG. 6 is a schematic structural diagram of an information sharing field apparatus according to Embodiment 3 of the present invention;
FIG. 7 is a schematic structural diagram of an information sharing server according to Embodiment 4 of the present invention; and
FIG. 8 is a schematic structural diagram of an information sharing field apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

An embodiment of the present invention provides an information sharing method, and an embodiment of the present invention further provides a corresponding information sharing field apparatus. Details are respectively given in the following.

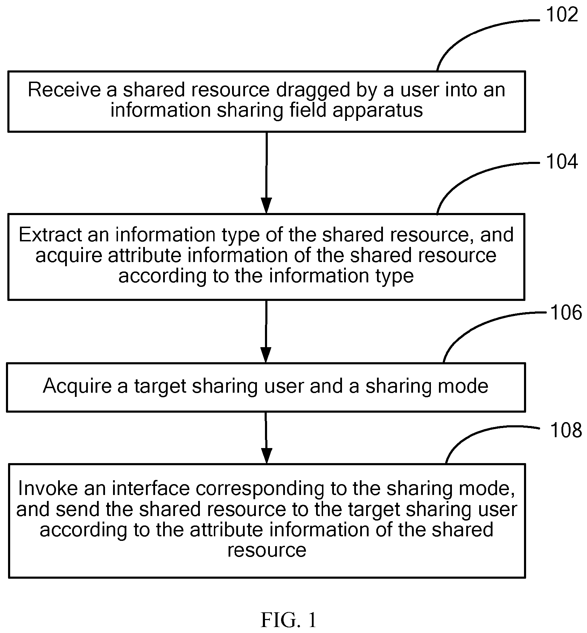

Referring to FIG. 1, a flowchart of an information sharing method according to Embodiment 1 of the present invention is shown, which includes the following steps:
Step 102: Receive a shared resource dragged by a user into an information sharing field apparatus; and provide a uniform sharing application entry, so as to enable the user to perform information sharing on a terminal through direct dragging.
Step 104: Extract an information type of the shared resource, and acquire attribute information of the shared resource according to the information type.

The information type of the shared resource may include a local resource type and a network resource type, where the local resource type is, for example, a locally installed application resource, a local text resource, or a local multimedia resource, and the network resource type is, for example, a network link resource, a network text resource, or a network multimedia resource.

The attribute information of the shared resource includes an icon, a thumbnail image, an application ID, a URL, and other information of the shared resource.

Step 106: Acquire a target sharing user and a sharing mode, where the user can select a target user or a target user group in need of sharing through a manual input mode or an associated address book extraction mode, and the user can select one or more sharing modes.

Step 108: Invoke an interface corresponding to the sharing mode, and send the shared resource to the target sharing user according to the attribute information of the shared resource.

According to the sharing mode selected by the user, a corresponding interface is invoked, and the acquired attribute information, including the URL, text, image, and icon link, of the shared resource is sent to the target sharing user to implement information sharing for the specific target user.

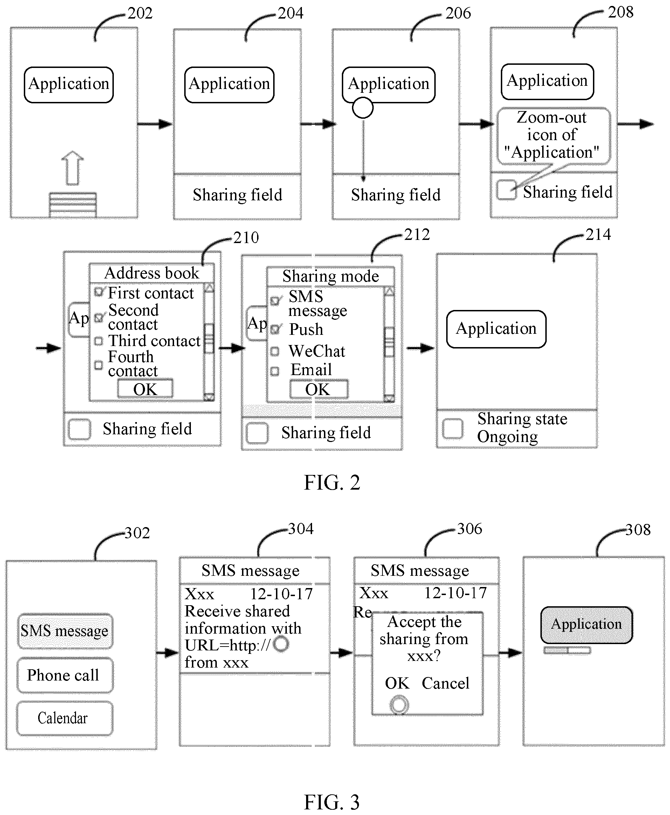

Referring to FIG. 2, an effect diagram of an information sharing sending end according to Embodiment 1 of the present invention is shown, which includes the following steps:

A mobile phone type terminal is taken as an example in this embodiment, and an effect diagram is used to illustrate a method and an apparatus for implementing an information sharing sending end:
Step 202: Receive an instruction of a user sharing a locally installed application of a mobile phone.
Step 204: Receive an instruction of the user opening an information sharing field application, and display an information sharing field window.
Step 206: Receive an instruction of the user dragging the application to be shared into the information sharing field, extract an information type of the shared resource, which is a locally installed application resource, and acquire attribute information, including a URL, an icon, and an application ID, of the application.
Step 208: Display the icon of the application resource that needs to be shared in the information sharing field, which indicates that the sharing request is accepted.
Step 210: Pop up a prompt box to require the user to select a target sharing user; and receive an instruction of the user selecting a target user or a target user group in need of sharing through a manual input mode or an associated address book extraction mode, where taking this embodiment as an example, the user selects a first contact and a second contact as target sharing users through the associated address book extraction mode.
Step 212: Pop up a prompt box to require the user to select a sharing mode, where the user may select one or more sharing modes, for example, a SMS message mode, a MMS message mode, a push (push) mode, an email (Email) mode, a microblog mode, a WeChat mode, and an arbitrary network platform contact mode. In this embodiment, the user selects the SMS message sharing mode and the push sharing mode.
Step 214: Implement resource and information sharing for the first contact and the second contact by using the SMS message mode and the push mode respectively, and the information sharing field displays the sharing state as sharing is ongoing; and after the sharing of the two modes is completed, the information sharing field displays the sharing state as sharing is successful.

A SMS message sending interface is invoked to send the attribute information (URL) of the application to be shared to the first contact and the second contact, so as to complete the information sharing.

The attribute information (icon, application id, URL) of the application, information of the target sharing users (mobile phone numbers of the first contact and second contact), and sender identifier information are sent to a Provider (a third-party service provider of push), and the Provider invokes a push interface to push the attribute information (icon, application id, URL) of the application to the contact 1 and contact 2.

Referring to FIG. 3, an effect diagram of an information sharing receiving end according to Embodiment 1 of the present invention is shown, where a target sharing user receives shared information in a SMS message mode, and the effect diagram includes the following steps:
Step 302: Terminals of target sharing users, namely, a first contact and a second contact, receive a SMS message.
Step 304: The SMS message displays that: Receive shared information with a URL, for example, http://......, from XXX.
Step 306: The target sharing users select to accept the shared information.
Step 308: According to the URL, download an application to be shared to the terminal devices of the target sharing users, namely, the first contact and the second contact, to complete the resource and information sharing.

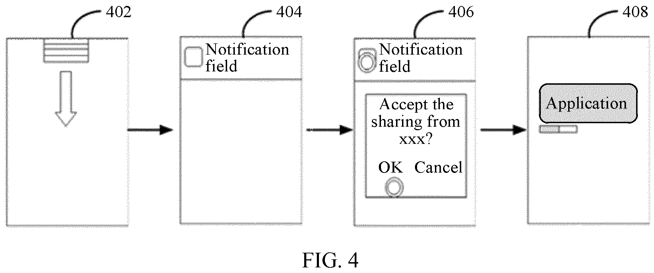

Referring to FIG. 4, another effect diagram of an information sharing receiving end according to an Embodiment 1 of the present invention is shown, where a target sharing user receives shared information in a push mode, and the effect diagram includes the following steps:
Step 402: A target sharing user terminal receives a push message prompt.
Step 404: The target sharing user terminal opens a push message notification field to display content of shared information.
Step 406: The target sharing user terminal selects to receive the shared information.
Step 408: According to a URL, download an application to be shared to the target sharing user terminal device to complete the resource and information sharing.

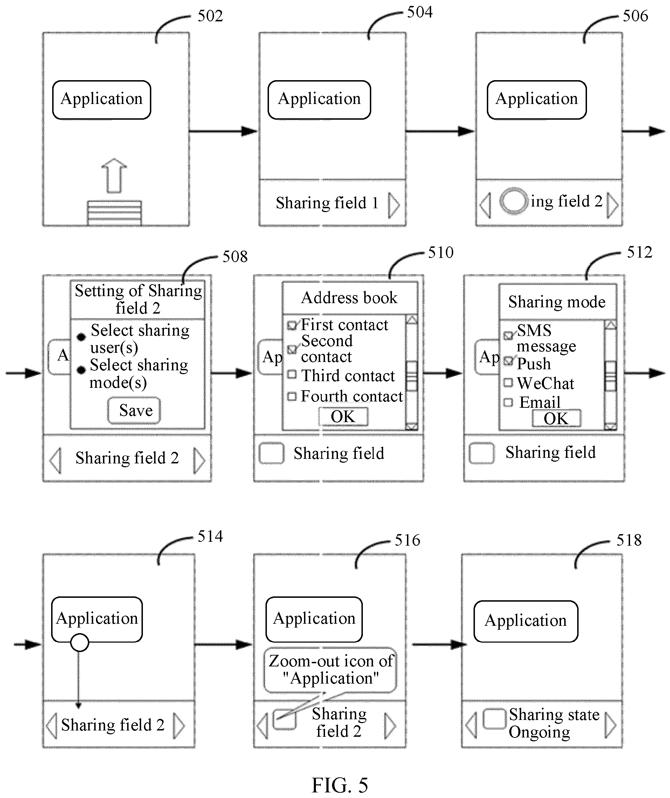

Referring to FIG. 5, an effect diagram of an information sharing sending end according to Embodiment 2 of the present invention is shown, this embodiment illustrates in detail the attribute setting of an information sharing field and displays functions of the information sharing field in a split-screen manner, and the effect diagram includes the following steps:
Step 502: Receive an instruction of a user opening an information sharing application.
Step 504: Display an information sharing field 1, where the information sharing application supports split-screen display of the information sharing field; and the split-screen display content includes the information sharing field 1 and an information sharing field 2.
Step 506: Slide to enter the information sharing field 2; according to an individual requirement of the user, attribute setting needs to be performed on the information sharing field 2, and slide to enter the information sharing field 2.
Step 508: Set attributes of the information sharing field, where the attribute setting of the information sharing field includes setting of a target sharing user, setting of a sharing mode, setting of a sharing field identifier, setting of a sharing field background pattern, and the like.
Step 510: Set a target sharing user of the information sharing field 2; and receive, by the information sharing application, an instruction of the user selecting a target user or a target user group in need of sharing through a manual input mode or an associated address book extraction mode, where taking this embodiment as an example, the user selects a first contact and a second contact as target sharing users through the associated address book extraction mode.
Step 512: Set a sharing mode of the information sharing field 2; and receive an instruction of the user selecting one or more sharing modes, for example, a SMS message mode, a MMS message mode, a push (push) mode, an email (Email) mode, a microblog mode, a WeChat mode, and an arbitrary network platform contact mode. In this embodiment, the user selects the SMS message sharing mode and the push sharing mode.
Step 514: The attribute setting of the information sharing field becomes valid after being acknowledged and saved, and in this embodiment, the user drags a local application as a shared resource into the information sharing field 2.
Step 516: Extract an information type of the shared resource, which is a locally installed application resource, acquire attribute information, including a URL, an icon, and an application ID, of the application, and display the icon in the information sharing field 2.
Step 518: According to the sharing modes (the SMS message mode and the push mode) set in the information sharing field 2, send the attribute information, such as the URL, of the shared application to the target sharing users (the first contact and the second contact) set in the information sharing field 2 to implement the resource and information sharing.

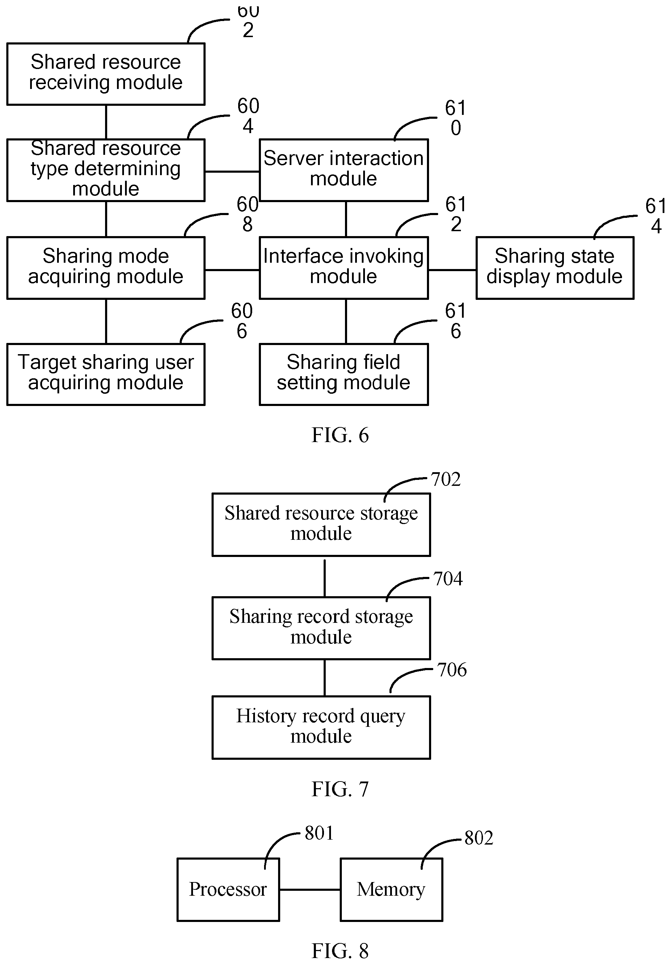

Referring to FIG. 6, a schematic structural diagram of an information sharing field apparatus according to Embodiment 3 of the present invention is shown, and the information sharing field apparatus includes the following modules:
a shared resource receiving module 602, configured to receive a shared resource dragged by a user into the information sharing field apparatus, and display an icon of the shared resource in the information sharing field apparatus;
a shared resource type determining module 604, configured to extract an information type of the shared resource, and acquire attribute information of the shared resource according to the information type; in this embodiment, it is taken as an example that the information type of the shared resource is multimedia data stored by the user terminal locally;
a target sharing user acquiring module 606, configured to acquire a target user in need of sharing, so as to enable the user to send shared information to the specific target user;
a sharing mode acquiring module 608, configured to acquire a sharing mode, so as to enable the user to select different sharing modes according to requirements and preference;
a server interaction module 610, configured to upload the shared resource to a server, and acquire from the server a URL in which the shared resource is stored; taking this embodiment as an example, a shared resource of a local multimedia data type is uploaded to a server, and a URL in which the shared resource is stored is acquired, so as to enable the shared resource type determining module to obtain complete attribute information of the shared resource; and
the server interaction module 610 is further configured to upload a sharing operation record to the server, and support query from the server a sharing history record; in another embodiment, the server interaction module 610 may further be configured to, after the user completes an information sharing operation, upload a record of the information sharing operation to the server for storage and management, where the record of the information sharing operation includes information of the shared resource, such as the attribute information, sharing time, the target sharing user, the sharing mode, and a sharing result, and when the user queries the sharing history record, receive and display information of the sharing history record returned by a client;
an interface invoking module 612, configured to invoke an interface corresponding to the sharing mode selected by the user, and send the acquired attribute information, including the URL, text, image, and icon link, of the shared resource to the target sharing user to implement information sharing for the specific target user;
a sharing state display module 614, configured to display a sharing state, including at least one of the following states: sharing is ongoing, sharing is successful, and sharing fails; and
a sharing field setting module 616, configured to create a sharing field, delete a sharing field, or set sharing field attribute information, which includes setting of sharing field attributes such as a target sharing user, a sharing mode, a sharing field identifier, and a split-screen display background pattern.

Referring to FIG. 7, a schematic structural diagram of an information sharing server according to Embodiment 4 of the present invention is shown, and the information sharing server includes the following modules:
a shared resource storage module 702, configured to receive and store a shared resource, and return a URL in which the shared resource is stored;
a sharing record storage module 704, configured to receive and store a sharing operation record; taking this embodiment as an example, the sharing record storage module 704 is configured to, after a user completes an information sharing operation, upload a record of the information sharing operation to the server for storage and management, where the record of the information sharing operation includes information of the shared resource, such as attribute information, sharing time, a target sharing user, a sharing mode, and a sharing result; and
a history record query module 706, configured to manage an information sharing field apparatus, and when the information sharing field apparatus puts forward a query request, return a sharing history record; taking this embodiment as an example, a user initiates a sharing history record query request to the server in an information sharing field apparatus of a mobile phone terminal, and the server may return information of a sharing history record according to a query condition.

Referring to FIG. 8, an information sharing field apparatus according to an embodiment of the present invention includes: a processor 801 and a memory 802. The processor 801 is configured to perform all or a part of the steps in the foregoing method. The memory 802 is configured to store the shared resource.

In the several embodiments provided in the present application, it should be understood that the disclosed system, apparatus, and method may be implemented in other manners. For example, the described apparatus embodiment is merely exemplary. For example, the division of the modules or units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, or a network device) or a processor (processor) to perform all or a part of the steps of the methods described in the embodiments of the present invention. The foregoing storage medium includes: any medium that can store program codes, such as a USB flash disk, a removable hard disk, a read-only memory (Read-Only Memory, ROM), a random access memory (Random Access Memory, RAM), a magnetic disk, or an optical disk.

It should be noted that the foregoing embodiments are merely intended for describing the technical solutions of the present invention other than limiting the present invention. Although the present invention is described in detail with reference to the foregoing embodiments, a person of ordinary skill in the art should understand that modifications can still be made to the technical solutions described in the foregoing embodiments, or equivalent replacements can still be made to some technical features thereof, without departing from the scope of the technical solutions of the embodiments of the present invention.

## Claims

1. An information sharing method, performed by an information sharing field apparatus, the method comprising:
receiving (102) a shared resource dragged by a user into an information sharing field window displayed by the apparatus;
extracting (104) an information type of the shared resource, and acquiring attribute information of the shared resource according to the information type, wherein the attribute information includes an icon, a thumbnail image, an application ID, a URL, and other information of the shared resource;
acquiring (106) a target sharing user,
acquiring (106) a sharing mode, comprising receiving an instruction of the user selecting a sharing mode, wherein the sharing mode supports multiple modes, comprising at least one of the following modes: a short message service, SMS, message mode, a multimedia messaging service, MMS, message mode, a push mode, an email mode, a microblog mode, a WeChat mode, and an arbitrary network platform contact mode, and, if the user does not select or set a sharing mode, using a default sharing mode of a system to send the shared resource to the target sharing user; and
invoking (108) an interface corresponding to the sharing mode, and sending the shared resource to a terminal of the target sharing user according to the attribute information of the shared resource,
wherein a shared resource type of the shared resource comprises at least one of the following information types: a locally installed application resource, a local text resource, a local multimedia resource, a network link resource, a network text resource, and a network multimedia resource,
the method further comprising: supporting establishment of multiple information sharing fields, and when the multiple information sharing fields exist, supporting split-screen display of the multiple information sharing fields, wherein each information sharing field is displayed in a respective split-screen area, and wherein each acquired sharing mode and each acquired target sharing user is associated with a respective one of the multiple information sharing fields displayed in the split-screen, and wherein, when the shared resource is dragged into an information sharing field, the shared resource is displayed and shared via the respective target user.

2. The information sharing method according to claim 1, wherein the sharing field apparatus provides a uniform resource sharing application, and uses the uniform resource sharing application to implement sharing of one or more resource types.

3. The information sharing method according to claim 1, wherein the acquiring the target sharing user supports multiple acquiring modes, comprising at least one of the following modes: a manual input mode and an associated address book extraction mode.

4. The information sharing method according to claim 1, further comprising: supporting presetting of a target sharing user and a sharing mode, storing the setting in an attribute of the information sharing field, and supporting naming of the information sharing field for distinguishing.

5. The information sharing method according to any one of claims 1 to 4, further comprising: supporting upload of a shared resource of a local type to a server, and acquiring from the server a URL in which the shared resource is stored.

6. The information sharing method according to any one of claims 1 to 5, further comprising: supporting upload of a sharing operation record to the server, receiving a management operation from the server, and supporting query from the server a sharing history record.

7. The information sharing method according to any one of claims 1 to 6, further comprising: supporting cancellation of a current sharing operation in a manner of dragging the shared resource out of the information sharing field or deleting an icon of the shared resource in the information sharing field.

8. An information sharing system, comprising: an information sharing field apparatus and a server apparatus, wherein
the information sharing field apparatus is configured to receive a shared resource dragged by a user into an information sharing field window displayed by the apparatus; extract an information type of the shared resource, and acquire attribute information of the shared resource according to the information type, wherein the attribute information includes an icon, a thumbnail image, an application ID, a URL, and other information of the shared resource; acquire a target sharing user, and acquire a sharing mode, comprising receiving an instruction of the user selecting a sharing mode, wherein the sharing mode supports multiple modes, comprising at least one of the following modes: a short message service, SMS, message mode, a multimedia messaging service, MMS, message mode, a push mode, an email mode, a microblog mode, a WeChat mode, and an arbitrary network platform contact mode, and, if the user does not select or set a sharing mode, to use a default sharing mode of a system to send the shared resource to the target sharing user; invoke an interface corresponding to the sharing mode, and send the shared resource to the target sharing user according to the attribute information of the shared resource; and; and
the server apparatus is configured to receive and store a shared resource, return a URL in which the shared resource is stored, receive and store a sharing operation record, and when the information sharing field apparatus puts forward a query request, return a sharing history record, wherein a shared resource type of the shared resource, comprises at least one of the following information types: a locally installed application resource, a local text resource, a local multimedia resource, a network link resource, a network text resource, and a network multimedia resource,
the information sharing field apparatus being further configured to support establishment of multiple information sharing fields, and when the multiple information sharing fields exist, support split-screen display of the multiple information sharing fields, wherein each information sharing field is displayed in a respective split-screen area, and wherein each acquired sharing mode and each acquired target sharing user is associated with a respective one of the multiple information sharing fields displayed in the split-screen, and wherein, when the shared resource is dragged into an information sharing field, the shared resource is displayed and shared via the respective target user.

9. An information sharing field apparatus, comprising:
a shared resource receiving module (602), configured to receive a shared resource dragged by a user into an information sharing field window displayed by the apparatus, and display an icon of the shared resource in the information sharing field apparatus;
a shared resource type determining module (604), configured to extract an information type of the shared resource, and acquire attribute information of the shared resource according to the information type, wherein the attribute information includes an icon, a thumbnail image, an application ID, a URL, and other information of the shared resource;
a target sharing user acquiring module (606), configured to acquire a target user in need of sharing, so as to enable the user to send shared information to the specific target user;
a sharing mode acquiring module (608), configured to acquire a sharing mode, so as to enable the user to select different sharing modes according to requirements and preference, a sharing mode, comprising receiving an instruction of the user selecting a sharing mode, wherein the sharing mode supports multiple modes, comprising at least one of the following modes: a short message service, SMS, message mode, a multimedia messaging service, MMS, message mode, a push mode, an email mode, a microblog mode, a WeChat mode, and an arbitrary network platform contact mode, and, if the user does not select or set a sharing mode, to use a default sharing mode of a system to send the shared resource to the target sharing user; and
an interface invoking module (612), configured to invoke an interface corresponding to the sharing mode, and send the shared resource to a terminal of the target sharing user according to the attribute information of the shared resource,
wherein a shared resource type of the shared resource comprises at least one of the following information types: a locally installed application resource, a local text resource, a local multimedia resource, a network link resource, a network text resource, and a network multimedia resource,
the apparatus further comprising: a sharing field setting module, configured to create a sharing field, delete a sharing field, or set sharing field attribute information, wherein the sharing field attribute information comprises a sharing field identifier, a target sharing user, a sharing mode, and a split-screen display background pattern, the apparatus is further configured to support establishment of multiple information sharing fields, and when the multiple information sharing fields exist, to support split-screen display of the multiple information sharing fields,
wherein each information sharing field is displayed in a respective split-screen area, and wherein each acquired sharing mode and each acquired target sharing user is associated with a respective one of the multiple information sharing fields displayed in the split-screen, and wherein, when the shared resource is dragged into an information sharing field, the shared resource is displayed and shared via the respective target user.

10. The information sharing field apparatus according to claim 9, further comprising: a server interaction module, configured to upload the shared resource to a server, and acquire from the server a URL in which the shared resource is stored; and further configured to upload a sharing operation record to the server, and support query from the server a sharing history record.

## Patentansprüche

1. Verfahren für eine gemeinsame Nutzung von Informationen, das durch eine Vorrichtung mit einem Feld für die gemeinsame Nutzung von Informationen durchgeführt wird, wobei das Verfahren umfasst:
Empfangen (102) einer gemeinsam genutzten Ressource, die durch einen Benutzer in ein Fenster mit dem Feld für die gemeinsame Nutzung von Informationen, das durch die Vorrichtung angezeigt wird, gezogen wird;
Extrahieren (104) einer Informationsart der gemeinsam genutzten Ressource und Erfassen von Attributinformationen der gemeinsam genutzten Ressource gemäß der Informationsart, wobei die Attributinformationen ein Symbol, ein Miniaturbild, eine Anwendungs-ID, eine **URL** und andere Informationen der gemeinsam genutzten Ressource einschließen;
Erfassen (106) eines Zielbenutzers der gemeinsamen Nutzung,
Erfassen (106) eines Modus der gemeinsamen Nutzung, das das Empfangen einer Anweisung des Benutzers, der einen Modus der gemeinsamen Nutzung auswählt, umfasst, wobei der Modus der gemeinsamen Nutzung mehrere Modi, die mindestens einen der folgenden Modi umfassen, unterstützt: einen Kurznachrichtendienst(SMS)-Nachrichtenmodus, einen Multimedianachrichtendienst(MMS)-Nachrichtenmodus,
einen Push-Modus, einen E-Mail-Modus, einen Microblog-Modus, einen WeChat-Modus und einen Kontaktmodus einer beliebigen Netzwerkplattform, und, falls der Benutzer keinen Modus der gemeinsamen Nutzung auswählt oder einstellt, Verwenden eines Standardmodus der gemeinsamen Nutzung eines Systems, um die gemeinsam genutzte Ressource an den Zielbenutzer der gemeinsamen Nutzung zu senden; und
Aufrufen (108) einer Schnittstelle, die dem Modus der gemeinsamen Nutzung entspricht, und Senden der gemeinsam genutzten Ressource an ein Endgerät des Zielbenutzers der gemeinsamen Nutzung gemäß den Attributinformationen der gemeinsam genutzten Ressource,
wobei eine Art von gemeinsam genutzter Ressource der gemeinsam genutzten Ressource mindestens eine der folgenden Informationsarten umfasst: eine lokal installierte Anwendungsressource, eine lokale Textressource, eine lokale Multimediaressource, eine Netzwerkverbindungsressource, eine Netzwerktextressource und eine Netzwerkmultimediaressource,
wobei das Verfahren ferner umfasst: Unterstützen einer Einrichtung mehrerer Felder für die gemeinsame Nutzung von Informationen und, wenn die mehreren Felder für die gemeinsame Nutzung von Informationen vorhanden sind, Unterstützen einer Anzeige mit geteiltem Bildschirm der mehreren Felder für die gemeinsame Nutzung von Informationen, wobei jedes Feld für die gemeinsame Nutzung von Informationen in einem jeweiligen Bereich mit geteiltem Bildschirm angezeigt wird und wobei jeder erfasste Modus der gemeinsamen Nutzung und jeder erfasste Zielbenutzer der gemeinsamen Nutzung einem jeweiligen der mehreren Felder für die gemeinsame Nutzung von Informationen, die in dem geteilten Bildschirm angezeigt werden,
zugeordnet ist und wobei, wenn die gemeinsam genutzte Ressource in ein Feld für die gemeinsame Nutzung von Informationen gezogen wird, die gemeinsam genutzte Ressource angezeigt und über den jeweiligen Zielbenutzer gemeinsam genutzt wird.

2. Verfahren für die gemeinsame Nutzung von Informationen nach Anspruch 1, wobei die Vorrichtung mit dem Feld für die gemeinsame Nutzung eine einheitliche Anwendung für die gemeinsame Nutzung von Ressourcen bereitstellt und die einheitliche Anwendung für die gemeinsame Nutzung von Ressourcen verwendet, um die gemeinsame Nutzung einer oder mehrerer Ressourcenarten zu implementieren.

3. Verfahren für die gemeinsame Nutzung von Informationen nach Anspruch 1, wobei das Erfassen des Zielbenutzers der gemeinsamen Nutzung mehrere Erfassungsmodi, die mindestens einen der folgenden Modi umfassen, unterstützt: einen manuellen Eingabemodus und einen zugeordneten Adressbuchextraktionsmodus.

4. Verfahren für die gemeinsame Nutzung von Informationen nach Anspruch 1, das ferner umfasst: Unterstützen einer Voreinstellung eines Zielbenutzers der gemeinsamen Nutzung und eines Modus der gemeinsamen Nutzung, Speichern der Einstellung in einem Attribut des Felds für die gemeinsame Nutzung von Informationen und Unterstützen einer Benennung des Felds für die gemeinsame Nutzung von Informationen zum Unterscheiden.

5. Verfahren für die gemeinsame Nutzung von Informationen nach einem der Ansprüche 1 bis 4, das ferner umfasst: Unterstützen eines Hochladens einer gemeinsam genutzten Ressource einer lokalen Art auf einen Server und Erfassen von dem Server einer **URL,** unter der die gemeinsam genutzte Ressource gespeichert ist.

6. Verfahren für die gemeinsame Nutzung von Informationen nach einem der Ansprüche 1 bis 5, das ferner umfasst: Unterstützen des Hochladens eines Datensatzes eines Vorgangs der gemeinsamen Nutzung auf den Server, Empfangen eines Verwaltungsvorgangs von dem Server und Unterstützen einer Abfrage eines Datensatzes des Verlaufs der gemeinsamen Nutzung von dem Server.

7. Verfahren für die gemeinsame Nutzung von Informationen nach einem der Ansprüche 1 bis 6, das ferner umfasst: Unterstützen eines Abbruchs eines aktuellen Vorgangs der gemeinsamen Nutzung auf eine Weise des Ziehens der gemeinsam genutzten Ressource aus dem Feld für die gemeinsame Nutzung von Informationen oder eines Löschens eines Symbols der gemeinsam genutzten Ressource in dem Feld für die gemeinsame Nutzung von Informationen.

8. System für die gemeinsame Nutzung von Informationen, das umfasst: eine Vorrichtung mit dem Feld für die gemeinsame Nutzung von Informationen und eine Servervorrichtung, wobei
die Vorrichtung mit dem Feld für die gemeinsame Nutzung von Informationen konfiguriert ist, um eine gemeinsam genutzte Ressource zu empfangen, die durch einen Benutzer in ein Fenster mit dem Feld für die gemeinsame Nutzung von Informationen, das durch die Vorrichtung angezeigt wird, gezogen wird; eine Informationsart der gemeinsam genutzten Ressource zu extrahieren und Attributinformationen der gemeinsam genutzten Ressource gemäß der Informationsart zu erfassen, wobei die Attributinformationen ein Symbol, ein Miniaturbild, eine Anwendungs-ID, eine URL und andere Informationen der gemeinsam genutzten Ressource einschließen; einen Zielbenutzer der gemeinsamen Nutzung zu erfassen und einen Modus der gemeinsamen Nutzung zu erfassen, das das Empfangen einer Anweisung des Benutzers, der einen Modus der gemeinsamen Nutzung auswählt, umfasst, wobei der Modus der gemeinsamen Nutzung mehrere Modi, die mindestens einen der folgenden Modi umfassen, unterstützt: einen Kurznachrichtendienst(SMS)-Nachrichtenmodus, einen Multimedianachrichtendienst(MMS)-Nachrichtenmodus, einen Push-Modus, einen E-Mail-Modus, einen Microblog-Modus, einen WeChat-Modus und einen Kontaktmodus der beliebigen Netzwerkplattform, und, falls der Benutzer keinen Modus der gemeinsamen Nutzung auswählt oder einstellt, um einen Standardmodus der gemeinsamen Nutzung eines Systems zu benutzen, um die gemeinsam genutzte Ressource an den Zielbenutzer der gemeinsamen Nutzung zu senden; eine Schnittstelle, die dem Modus der gemeinsamen Nutzung entspricht, aufzurufen, und die gemeinsam genutzte Ressource an den Zielbenutzer der gemeinsamen Nutzung gemäß den Attributinformationen der gemeinsam genutzten Ressource zu senden; und
die Servervorrichtung konfiguriert ist, um eine gemeinsam genutzte Ressource zu empfangen und zu speichern, eine URL, unter der die gemeinsam genutzte Ressource gespeichert ist, zurückzugeben, einen Datensatz für die gemeinsame Nutzung von Vorgängen zu empfangen und zu speichern und, wenn die Vorrichtung mit dem Feld für die gemeinsame Nutzung von Informationen eine Abfrageanforderung stellt, einen Datensatz des Verlaufs der gemeinsamen Nutzung zurückzugeben, wobei eine Art von gemeinsam genutzter Ressource der gemeinsam genutzten Ressource mindestens eine der folgenden Informationsarten umfasst: eine lokal installierte Anwendungsressource, eine lokale Textressource, eine lokale Multimediaressource, eine Netzwerkverbindungsressource, eine Netzwerktextressource und eine Netzwerkmultimediaressource,
wobei die Vorrichtung mit dem Feld für die gemeinsame Nutzung von Informationen ferner konfiguriert ist, um die Einrichtung mehrerer Felder für die gemeinsame Nutzung von Informationen zu unterstützen und, wenn die mehreren Felder für die gemeinsame Nutzung von Informationen vorhanden sind, die Anzeige mit geteiltem Bildschirm der mehreren Felder für die gemeinsame Nutzung von Informationen zu unterstützen, wobei jedes Feld für die gemeinsame Nutzung von Informationen in einem jeweiligen Bereich mit geteiltem Bildschirm angezeigt wird und jeder erfasste Modus der gemeinsamen Nutzung und jeder erfasste Zielbenutzer der gemeinsamen Nutzung einem jeweiligen der mehreren Felder für die gemeinsame Nutzung von Informationen, die in dem geteilten Bildschirm angezeigt werden, zugeordnet ist und wobei, wenn die gemeinsam genutzte Ressource in ein Feld für die gemeinsame Nutzung von Informationen gezogen wird, die gemeinsam genutzte Ressource angezeigt und über den jeweiligen Zielbenutzer gemeinsam genutzt wird.

9. Vorrichtung mit dem Feld für die gemeinsame Nutzung von Informationen, die umfasst:
ein Empfangsmodul (602) für gemeinsam genutzte Ressourcen, das konfiguriert ist, um eine gemeinsam genutzte Ressource zu empfangen, die durch einen Benutzer in ein Fenster mit dem Feld für die gemeinsame Nutzung von Informationen, das durch die Vorrichtung angezeigt wird, gezogen wird, und ein Symbol der gemeinsam genutzten Ressource in der Vorrichtung mit dem Feld für die gemeinsame Nutzung von Informationen anzuzeigen;
ein Modul (604) zum Bestimmen der Art der gemeinsam genutzten Ressource, das konfiguriert ist, um eine Informationsart der gemeinsam genutzten Ressource zu extrahieren und Attributinformationen der gemeinsam genutzten Ressource gemäß der Informationsart zu erfassen, wobei die Attributinformationen ein Symbol, ein Miniaturbild, eine Anwendungs-ID, eine URL und andere Informationen der gemeinsam genutzten Ressource einschließen;
ein Modul (606) zum Erfassen von Zielbenutzern für die gemeinsame Nutzung, das konfiguriert ist, um einen Zielbenutzer, der Informationen für die gemeinsame Nutzung benötigt, zu erfassen, um dem Benutzer zu ermöglichen, gemeinsam genutzte Informationen an den spezifischen Zielbenutzer zu senden;
ein Modul (608) zum Erfassen des Modus der gemeinsamen Nutzung, das konfiguriert ist, um einen Modus der gemeinsamen Nutzung zu erfassen, um dem Benutzer zu ermöglichen, je nach Anforderungen und Vorliebe unterschiedliche Modi für die gemeinsame Nutzung auszuwählen, wobei ein Modus der gemeinsamen Nutzung das Empfangen einer Anweisung des Benutzers, um einen Modus der gemeinsamen Nutzung auszuwählen, umfasst, wobei der Modus der gemeinsamen Nutzung mehrere Modi, die mindestens einen der folgenden Modi umfassen, unterstützt: einen Kurznachrichtendienst(SMS)-Nachrichtenmodus, einen
Multimedianachrichtendienst(MMS)-Nachrichtenmodus, einen Push-Modus, einen E-Mail-Modus, einen Microblog-Modus, einen WeChat-Modus und einen Kontaktmodus der beliebigen Netzwerkplattform, und, falls der Benutzer keinen Modus der gemeinsamen Nutzung auswählt oder einstellt, um einen Standardmodus der gemeinsamen Nutzung eines Systems zu benutzen, um die gemeinsam genutzte Ressource an den Zielbenutzer zu senden; und
ein Schnittstellenaufrufmodul (612), das konfiguriert ist, um eine Schnittstelle, die dem Modus der gemeinsamen Nutzung entspricht, aufzurufen und die gemeinsam genutzte Ressource gemäß den Attributinformationen der gemeinsam genutzten Ressource an ein Endgerät des Zielbenutzers zu senden,
wobei eine Art von gemeinsam genutzter Ressource der gemeinsam genutzten Ressource mindestens eine der folgenden Informationsarten umfasst: eine lokal installierte Anwendungsressource, eine lokale Textressource, eine lokale Multimediaressource, eine Netzwerkverbindungsressource, eine Netzwerktextressource und eine Netzwerkmultimediaressource,
wobei die Vorrichtung ferner umfasst: ein Modul zum Einstellen des Felds für die gemeinsame Nutzung, das konfiguriert ist, um ein Feld für die gemeinsame Nutzung zu erstellen, ein Feld für die gemeinsame Nutzung zu löschen oder ein Feld für die gemeinsame Nutzung von Attributinformationen einzustellen, wobei das Feld für die gemeinsame Nutzung von Attributinformationen ein Feld für die Kennung der gemeinsamen Nutzung, einen Zielbenutzer der gemeinsamen Nutzung, einen Modus der gemeinsamen Nutzung und ein Hintergrundmuster für die Anzeige mit geteiltem Bildschirm umfassen; die Vorrichtung ferner konfiguriert ist, um die Einrichtung mehrerer Felder für die gemeinsame Nutzung von Informationen zu unterstützen, und,
wenn die mehreren Felder für die gemeinsame Nutzung von Informationen vorhanden sind, um die Anzeige mit geteiltem Bildschirm der mehreren Felder für die gemeinsame Nutzung von Informationen zu unterstützen,
wobei jedes Feld für die gemeinsame Nutzung von Informationen in einem jeweiligen Bereich mit geteiltem Bildschirm angezeigt wird und jeder erfasste Modus der gemeinsamen Nutzung und jeder erfasste Zielbenutzer der gemeinsamen Nutzung einem jeweiligen der mehreren Felder für die gemeinsame Nutzung von Informationen,
die in dem geteilten Bildschirm angezeigt werden, zugeordnet ist und wobei, wenn die gemeinsam genutzte Ressource in ein Feld für die gemeinsame Nutzung von Informationen gezogen wird, die gemeinsam genutzte Ressource angezeigt und über den jeweiligen Zielbenutzer gemeinsam genutzt wird.

10. Vorrichtung mit dem Feld für die gemeinsame Nutzung von Informationen nach Anspruch 9, die ferner umfasst: ein Serverinteraktionsmodul, das konfiguriert ist, um die gemeinsam genutzte Ressource auf einen Server hochzuladen und von dem Server eine URL, unter der die gemeinsam genutzte Ressource gespeichert ist, zu erfassen; und ferner konfiguriert ist, um einen Datensatz des Vorgangs der gemeinsamen Nutzung auf den Server hochzuladen und die Abfrage eines Datensatzes des Verlaufs der gemeinsamen Nutzung von dem Server zu unterstützen.

## Revendications

1. Procédé de partage d'informations, réalisé par un appareil de champ de partage d'informations, le procédé comprenant :
la réception (102) d'une ressource partagée glissée par un utilisateur dans une fenêtre de champ de partage d'informations affichée par l'appareil ;
l'extraction (104) d'un type d'informations de la ressource partagée, et l'acquisition d'informations d'attribut de la ressource partagée selon le type d'informations, dans lequel les informations d'attribut comportent une icône, une image de miniature, un ID d'application, une URL et d'autres informations de la ressource partagée ;
l'acquisition (106) d'un utilisateur de partage cible,
l'acquisition (106) d'un mode de partage, comprenant la réception d'une instruction de sélection d'un mode de partage par l'utilisateur, dans lequel le mode de partage prend en charge de multiples modes, comprenant au moins l'un parmi les modes suivants :
un mode de message de service de minimessages, SMS, un mode de message de service de messagerie multimédia, MMS, un mode de distribution personnalisée, un mode de courrier électronique, un mode de microblogue, un mode WeChat et un mode de contact de plateforme de réseau arbitraire, et, si l'utilisateur ne sélectionne pas ou ne règle pas de mode de partage, l'utilisation d'un mode de partage par défaut d'un système pour envoyer la ressource partagée à l'utilisateur de partage cible ; et
l'invocation (108) d'une interface correspondant au mode de partage, et l'envoi de la ressource partagée à un terminal de l'utilisateur de partage cible selon les informations d'attribut de la ressource partagée,
dans lequel un type de ressource partagée comprend au moins l'un parmi les types d'informations suivants : une ressource d'application installée localement, une ressource textuelle locale, une ressource multimédia locale, une ressource de lien réseau, une ressource textuelle réseau et une ressource multimédia réseau,
le procédé comprenant en outre : la prise en charge d'un établissement de multiples champs de partage d'informations et, lorsque les multiples champs de partage d'informations existent, la prise en charge d'un affichage en écran divisé des multiples champs de partage d'informations, dans lequel chaque champ de partage d'informations est affiché dans une zone d'écran divisé respective, et dans lequel chaque mode de partage acquis et chaque utilisateur de partage cible acquis sont associés à un champ de partage d'informations respectif parmi les multiples champs de partage d'informations affichés dans l'écran divisé, et dans lequel, lorsque la ressource partagée est glissée dans un champ de partage d'informations, la ressource partagée est affichée et partagée par l'intermédiaire de l'utilisateur cible respectif.

2. Procédé de partage d'informations selon la revendication 1, dans lequel l'appareil de champ de partage fournit une application de partage de ressource uniforme et utilise l'application de partage de ressource uniforme pour mettre en œuvre un partage d'un ou plusieurs types de ressources.

3. Procédé de partage d'informations selon la revendication 1, dans lequel l'acquisition de l'utilisateur de partage cible prend en charge de multiples modes d'acquisition, comprenant au moins l'un parmi les modes suivants : un mode de saisie manuelle et un mode d'extraction de carnet d'adresses associé.

4. Procédé de partage d'informations selon la revendication 1, comprenant en outre : la prise en charge du préréglage d'un utilisateur de partage cible et d'un mode de partage, le stockage du réglage dans un attribut du champ de partage d'informations, et la prise en charge d'une désignation du champ de partage d'informations à des fins de distinction.

5. Procédé de partage d'informations selon l'une quelconque des revendications 1 à 4, comprenant en outre : la prise en charge d'un téléchargement d'une ressource partagée d'un type local vers un serveur, et l'acquisition auprès du serveur d'une **URL** dans laquelle la ressource partagée est stockée.

6. Procédé de partage d'informations selon l'une quelconque des revendications 1 à 5, comprenant en outre : la prise en charge d'un téléchargement d'un enregistrement d'opération de partage vers le serveur, la réception d'une opération de gestion en provenance du serveur, et la prise en charge d'une interrogation d'un enregistrement d'historique de partage à partir du serveur.

7. Procédé de partage d'informations selon l'une quelconque des revendications 1 à 6, comprenant en outre : la prise en charge d'une annulation d'une opération de partage en cours de manière à faire glisser la ressource partagée hors du champ de partage d'informations ou à supprimer une icône de la ressource partagée dans le champ de partage d'informations.

8. Système de partage d'informations, comprenant : un appareil de champ de partage d'informations et un appareil serveur, dans lequel
l'appareil de champ de partage d'informations est configuré pour recevoir une ressource partagée glissée par un utilisateur dans une fenêtre de champ de partage d'informations affichée par l'appareil ; extraire un type d'informations de la ressource partagée et acquérir des informations d'attribut de la ressource partagée selon le type d'informations, dans lequel les informations d'attribut comportent une icône, une image de miniature, un ID d'application, une URL et d'autres informations de la ressource partagée ; acquérir un utilisateur de partage cible, et acquérir un mode de partage, comprenant la réception d'une instruction de l'utilisateur sélectionnant un mode de partage, dans lequel le mode de partage prend en charge de multiples modes, comprenant au moins l'un parmi les modes suivants : un mode de message de service de minimessages, SMS, un mode de message de service de messagerie multimédia, MMS, un mode de distribution personnalisée, un mode de courrier électronique, un mode de microblogue, un mode WeChat et un mode de contact de plateforme de réseau arbitraire, et, si l'utilisateur ne sélectionne pas ou ne règle pas de mode de partage, utiliser un mode de partage par défaut d'un système pour envoyer la ressource partagée à l'utilisateur de partage cible ; invoquer une interface correspondant au mode de partage, et envoyer la ressource partagée à l'utilisateur de partage cible selon les informations d'attribut de la ressource partagée ; et l'appareil serveur est configuré pour recevoir et stocker une ressource partagée, renvoyer une URL dans laquelle la ressource partagée est stockée, recevoir et stocker un enregistrement d'opération de partage et, lorsque l'appareil de champ de partage d'informations émet une demande d'interrogation, renvoyer un enregistrement d'historique de partage, dans lequel un type de ressource partagée de la ressource partagée comprend au moins l'un parmi les types d'informations suivants : une ressource d'application installée localement, une ressource textuelle locale, une ressource multimédia locale, une ressource de lien réseau, une ressource textuelle réseau et une ressource multimédia réseau,
l'appareil de champ de partage d'informations étant en outre configuré pour prendre en charge un établissement de multiples champs de partage d'informations et, lorsque les multiples champs de partage d'informations existent, pour prendre en charge un affichage sur écran divisé des multiples champs de partage d'informations, dans lequel chaque champ de partage d'informations est affiché dans une zone d'écran divisé respective, et dans lequel chaque mode de partage acquis et chaque utilisateur de partage cible acquis sont associés à un champ de partage d'informations respectif parmi les multiples champs de partage d'informations affichés dans l'écran divisé, et dans lequel, lorsque la ressource partagée est glissée dans un champ de partage d'informations, la ressource partagée est affichée et partagée par l'intermédiaire de l'utilisateur cible respectif.

9. Appareil de champ de partage d'informations, comprenant :
un module de réception de ressource partagée (602), configuré pour recevoir une ressource partagée glissée par un utilisateur dans une fenêtre de champ de partage d'informations affichée par l'appareil, et pour afficher une icône de la ressource partagée dans l'appareil de champ de partage d'informations ;
un module de détermination de type de ressource partagée (604), configuré pour extraire un type d'informations de la ressource partagée, et acquérir des informations d'attribut de la ressource partagée selon le type d'informations, dans lequel les informations d'attribut comportent une icône, une image de miniature, un ID d'application, une URL et d'autres informations de la ressource partagée ;
un module d'acquisition d'utilisateur de partage cible (606), configuré pour acquérir un utilisateur cible ayant besoin de partage, afin de permettre à l'utilisateur d'envoyer des informations partagées à l'utilisateur cible spécifique ;
un module d'acquisition de mode de partage (608), configuré pour acquérir un mode de partage, afin de permettre à l'utilisateur de sélectionner différents modes de partage selon ses besoins et ses préférences, un mode de partage, comprenant la réception d'une instruction de l'utilisateur sélectionnant un mode de partage, dans lequel le mode de partage prend en charge de multiples modes, comprenant au moins l'un parmi les modes suivants :un mode de message de service de minimessages, SMS, un mode de message de service de messagerie multimédia, MMS, un mode de distribution personnalisée, un mode de courrier électronique, un mode de microblogue, un mode WeChat et un mode de contact de plateforme de réseau arbitraire, et, si l'utilisateur ne sélectionne pas ou ne règle pas de mode de partage, utiliser un mode de partage par défaut d'un système pour envoyer la ressource partagée à l'utilisateur de partage cible ; et
un module d'invocation d'interface (612), configuré pour invoquer une interface correspondant au mode de partage, et envoyer la ressource partagée à un terminal de l'utilisateur de partage cible selon les informations d'attribut de la ressource partagée,
dans lequel un type de ressource partagée comprend au moins l'un parmi les types d'informations suivants : une ressource d'application installée localement, une ressource textuelle locale, une ressource multimédia locale, une ressource de lien réseau, une ressource textuelle réseau et une ressource multimédia réseau,
l'appareil comprenant en outre : un module de réglage de champ de partage, configuré pour créer un champ de partage, supprimer un champ de partage, ou régler des informations d'attribut de champ de partage, dans lequel les informations d'attribut de champ de partage comprennent un identifiant de champ de partage, un utilisateur de partage cible, un mode de partage et un motif d'arrière-plan d'affichage en écran divisé, l'appareil est en outre configuré pour prendre en charge un établissement de multiples champs de partage d'informations et, lorsque les multiples champs de partage d'informations existent, pour prendre en charge un affichage en écran divisé des multiples champs de partage d'informations,
dans lequel chaque champ de partage d'informations est affiché dans une zone d'écran divisé respective, et dans lequel chaque mode de partage acquis et chaque utilisateur de partage cible acquis sont associés à un champ de partage d'informations respectif parmi les multiples champs de partage d'informations affichés dans l'écran divisé, et dans lequel, lorsque la ressource partagée est glissée dans un champ de partage d'informations, la ressource partagée est affichée et partagée par l'intermédiaire de l'utilisateur cible respectif.

10. Appareil de champ de partage d'informations selon la revendication 9, comprenant en outre : un module d'interaction avec un serveur, configuré pour télécharger la ressource partagée vers un serveur, et acquérir auprès du serveur une **URL** dans laquelle la ressource partagée est stockée ; et configuré en outre pour télécharger un enregistrement d'opération de partage vers le serveur, et pour prendre en charge une interrogation d'un enregistrement d'historique de partage à partir du serveur.
